# EUROPÄISCHE PATENTANMELDUNG

(11) **EP 4 574 388 A1**
(43) Veröffentlichungstag der Anmeldung: **25.06.2025**
(21) Anmeldenummer: 24220450.1
(22) Anmeldetag: 17.12.2024
(51) Int. Cl.: B29C 45/00, B29C 45/16, B60R 13/04, B60Q 1/00, B60Q 1/26, G09F 13/08

(54) **VERFAHREN ZUR HERSTELLUNG EINES AUSSENVERKLEIDUNGSTEILS AUS KUNSTSTOFFMATERIALIEN FÜR EIN FAHRZEUG**

(30) Priorität: 19.12.2023 DE 102023135773
(71) Anmelder: REHAU Automotive SE & Co. KG, 95111 Rehau (DE)
(72) Erfinder: Weller, Tobias, 95111 Rehau (DE)

(57) **Zusammenfassung**

Die Erfindung betrifft ein Verfahren zur Herstellung eines Außenverkleidungsteils aus Kunststoffmaterialien für ein Fahrzeug (V), wobei das Außenverkleidungsteil ein dünnwandig ausgebildetes Verkleidungselement (1) mit einer bestimmungsgemäßen Sichtseite (A) und einer der Sichtseite (A) gegenüberliegenden Innenseite umfasst, wobei das Verkleidungselement (1) in einem Spritzgussverfahren in einem Spritzgusswerkzeug (2) in einer Kavität (5) hergestellt wird. Das Verkleidungselement (1) weist mindestens einen ersten Bereich (10) auf, der aus einem ersten Kunststoffmaterial (6) besteht, und das Verkleidungselement (1) weist ferner mindestens einen zweiten transparenten oder lichtdurchlässigen Bereich (11) auf, der aus einem zweiten Kunststoffmaterial (7) besteht, wobei das Verfahren folgende Schritte umfasst. Einen Schritt des Formens des Verkleidungselements (1), der darin besteht das erste Kunststoffmaterial (6) zur Bildung des ersten Bereichs (10) und das zweite Kunststoffmaterial (7) zur Bildung des zweiten Bereichs (11) in die Kavität einzuspritzen, mindestens einen Schritt des teilweisen oder vollständigen Anordnens einer Deckschicht (13) auf dem ersten (10) und dem zweiten Bereich (11) des geformten Verkleidungselements (1), und mindestens einen Schritt des Entfernens eines Teils der Deckschicht (13) oder der gesamten Deckschicht (13) in dem wenigstens einen Leuchtbereich (12), wobei der Leuchtbereich (12) zumindest teilweise, vorzugsweise vollständig, innerhalb des transparenten oder lichtdurchlässigen Bereichs (11) des spitzgegossenen Verkleidungselements (1) liegt. Wobei das erste Kunststoffmaterial (6) und das zweite Kunststoffmaterial (7) über wenigstens einen gemeinsamen Multimaterial-Anguss (8) oder einen gemeinsamen Multimaterial-Angusskanal (8) in die Kavität (5) geleitet werden, wobei die beiden plastifizierten und/oder fließfähigen Kunststoffmaterialien (6, 7) bereits in dem gemeinsamen Multimaterial-Anguss (8) oder in dem gemeinsamen Multimaterial-Angusskanal (8) aufeinandertreffen und nachfolgend zusammen in die Kavität (5) geleitet und eingespritzt werden.

## Beschreibung

Die vorliegende Erfindung betrifft ein Verfahren zur Herstellung eines Außenverkleidungsteils aus Kunststoffmaterialien für ein Fahrzeug, wobei das Außenverkleidungsteil ein dünnwandig ausgebildetes Verkleidungselement mit einer bestimmungsgemäßen Sichtseite und einer der Sichtseite gegenüberliegenden Innenseite umfasst, wobei das Verkleidungselement bei einer Beleuchtung von der Innenseite her in wenigstens einem Leuchtbereich lokal durchleuchtbar ausgebildet ist. Das Verkleidungselement wird in einem Spritzgussverfahren in einem Spritzgusswerkzeug hergestellt, wobei das Spritzgusswerkzeug aus wenigstens zwei relativ zueinander verlagerbaren Formhälften besteht, wobei die Formhälften im geschlossenen Zustand eine, das Verkleidungselement geometrisch definierende, Kavität zwischen sich ausbilden. Das Verkleidungselement weist mindestens einen ersten Bereich auf, der aus einem ersten Kunststoffmaterial besteht, und das Verkleidungselement weist ferner mindestens einen zweiten transparenten oder lichtdurchlässigen Bereich auf, der aus einem zweiten Kunststoffmaterial besteht.

Das Verfahren umfasst folgende Schritte:
- einen Schritt des Formens des Verkleidungselements, der darin besteht das erste Kunststoffmaterial zur Bildung des ersten Bereichs und das zweite Kunststoffmaterial zur Bildung des zweiten Bereichs in die Kavität einzuspritzen,
- mindestens einen Schritt des teilweisen oder vollständigen Anordnens einer Deckschicht auf dem ersten und dem zweiten Bereich des geformten Verkleidungselements, und
- mindestens einen Schritt des Entfernens eines Teils der Deckschicht oder der gesamten Deckschicht in dem wenigstens einen Leuchtbereich, wobei der Leuchtbereich zumindest teilweise, vorzugsweise vollständig, innerhalb des transparenten oder lichtdurchlässigen Bereichs des spitzgegossenen Verkleidungselements liegt.

Ein gattungsgemäßes Verfahren ist in den Dokumenten EP 3 733 457 A1 oder DE 10 2012 003 200 B4 offenbart.

Nachteilig an diesen Verfahren ist jedoch, dass beim Zusammentreffen der Schmelzefronten der unterschiedlichen Kunststoffmaterialien, die aus voneinander beabstandeten Einzelmaterial-Angüssen in die Kavität eingespritzt werden - aufgrund der Unterschiede in den beiden Kunststoffmaterialien - eine sogenannte Fließlinie auf dem Verkleidungselement entsteht. Diese Fließlinie wird umso deutlicher, je unterschiedlicher die beiden Kunststoffmaterialien in ihren Materialeigenschaften sind. Insbesondere durch eine bei Verkleidungsteilen übliche nachträglich aufgebrachte Lackschicht als Deckschicht verstärkt sich dieser Effekt optisch und wird noch deutlicher sichtbar.

Aufgabe der vorliegenden Erfindung ist es daher ein Verfahren zur Herstellung eines Verkleidungsteils anzugeben, dass für einen einheitlicheren Übergang zwischen dem transparenten oder lichtdurchlässigen Bereich und dem ersten Bereich sorgt.

Diese Aufgabe wird vorliegend gelöst durch ein Verfahren zur Herstellung eines Außenverkleidungsteils aus Kunststoffmaterialien für ein Fahrzeug, wobei das Außenverkleidungsteil ein dünnwandig ausgebildetes Verkleidungselement mit einer bestimmungsgemäßen Sichtseite und einer der Sichtseite gegenüberliegenden Innenseite umfasst, wobei das Verkleidungselement bei einer Beleuchtung von der Innenseite her in wenigstens einem Leuchtbereich lokal durchleuchtbar ausgebildet ist, wobei das Verkleidungselement in einem Spritzgussverfahren in einem Spritzgusswerkzeug hergestellt wird, wobei das Spritzgusswerkzeug aus wenigstens zwei relativ zueinander verlagerbaren Formhälften besteht, wobei die Formhälften im geschlossenen Zustand eine, das Verkleidungselement geometrisch definierende, Kavität zwischen sich ausbilden, wobei das Verkleidungselement mindestens einen ersten Bereich aufweist, der aus einem ersten Kunststoffmaterial besteht, und das Verkleidungselement ferner mindestens einen zweiten transparenten oder lichtdurchlässigen Bereich aufweist, der aus einem zweiten Kunststoffmaterial besteht, wobei das Verfahren die folgende Schritte umfasst:
- einen Schritt des Formens des Verkleidungselements, der darin besteht das erste Kunststoffmaterial zur Bildung des ersten Bereichs und das zweite Kunststoffmaterial zur Bildung des zweiten Bereichs in die Kavität einzuspritzen,
- mindestens einen Schritt des teilweisen oder vollständigen Anordnens einer Deckschicht auf dem ersten und dem zweiten Bereich des geformten Verkleidungselements, und
- mindestens einen Schritt des Entfernens eines Teils der Deckschicht oder der gesamten Deckschicht in dem wenigstens einen Leuchtbereich, wobei der Leuchtbereich zumindest teilweise, vorzugsweise vollständig, innerhalb des transparenten oder lichtdurchlässigen Bereichs des spitzgegossenen Verkleidungselements liegt,
wobei das erste Kunststoffmaterial und das zweite Kunststoffmaterial über wenigstens einen gemeinsamen Multimaterial-Anguss oder einen gemeinsamen Multimaterial-Angusskanal in die Kavität geleitet werden, wobei die beiden plastifizierten und/oder fließfähigen Kunststoffmaterialien bereits in dem gemeinsamen Multimaterial-Anguss oder in dem gemeinsamen Multimaterial-Angusskanal aufeinandertreffen und nachfolgend zusammen in die Kavität geleitet und eingespritzt werden.

Dadurch, dass die beiden Kunststoffmaterialien sich bereits in dem gemeinsamen Multimaterial-Anguss oder in dem gemeinsamen Multimaterial-Angusskanal treffen - und nicht erst in der Kavität - können sich die beiden plastifizierten und/oder fließfähigen Kunststoffmaterialien bereits vor Eintritt in die Kavität an ihren Fließrändern / Fließfronten miteinander vereinigen bevor sich in der Kavität durch Abkühlprozesse oder durch Reaktion mit dem Gas (in der Regel Luft) in der Kavität ihre Verbindungsfähigkeit untereinander verringert. Hierdurch wird nicht nur das Auftreten von störenden Fließlinien auf dem Verkleidungselement minimiert, sondern gleichzeitig auch die Haftfestigkeit zwischen beiden Kunstoffmaterialien bzw. den beiden hieraus gebildeten Bereichen erhöht.

Selbstredend ist das zweite Kunststoffmaterial ein transparentes oder lichtdurchlässiges Kunststoffmaterial. Ebenso selbstverständlich ist, dass das Formen des Verkleidungselements in dem Spritzgusswerkzeug das Erstarren lassen der beiden Kunststoffmaterialien umfasst.

Beim Spritzguss muss jede Kavität eine kleine Öffnung haben, die als Anguss oder alternativ als Anspritzpunkt bezeichnet wird. Durch diese Öffnung fließt der plastifizierte Kunststoff in die Kavität. Die Zuleitung des Kunststoffmaterials zu dem Anguss erfolgt durch den Angusskanal.

Ein Element wird als transparent bezeichnet, wenn es von Licht im sichtbaren Bereich durchdrungen werden kann. Ein Element mit einem Transmissionsgrad von bis etwa 90% gilt noch als transparent. Ein Element wird als lichtdurchlässig bezeichnet, wenn es von Licht im sichtbaren Bereich durchdrungen wird, dabei aber keine klare Unterscheidung von Objekten mehr zulässt, die sich hinter dem Element befinden. Ein Element mit einem Transmissionsgrad bis etwa 30% gilt noch als lichtdurchlässig. Der Transmissionsgrad eines Materials bzw. Elements ist der Anteil des Lichtstroms, der durch das Material bzw. Element hindurchgeht. Der Transmissionsgrad ist also das Verhältnis der vom Material oder dem Element durchgelassenen Lichtintensität zur einfallenden Lichtintensität und nimmt Werte zwischen 0% und 100% an.

Der wenigstens eine Multimaterial-Anguss oder Multimaterial-Angusskanal kann vorzugsweise eine eigene Heizvorrichtung aufweisen, um durch eine Temperaturerhöhung der beiden Kunststoffmaterialien oder durch eine Verringerung der Abkühlrate der beiden Kunststoffmaterialien die Verbindung der beiden plastifizierten und/oder fließfähigen Kunststoffmaterialien untereinander optimieren zu können. Anders als eine Beheizung der Kavität bzw. der Formhälften können die Temperaturen der Kunststoffmaterialien hierdurch zielgerichtet reguliert werden.

Das Außenverkleidungsteil kann bevorzugt eine Türunterkantenblende oder eine Stoßfängerverkleidung oder eine Heckklappenaußenverkleidung oder eine Kotflügelverkleidung oder eine Kühlerverkleidung oder eine Schwellerverkleidung oder eine Frontmaske oder ein Heckspoiler sein. Eine Frontmaske ist derjenige Teil eines Fahrzeugs an deren Stelle sich bei Verbrennungsfahrzeugen der Kühlergrill befunden hat. Insbesondere bei Elektrofahrzeugen ist diese Frontmaske nicht mehr als Lufteinlass zu dem Kühler (den es hier nicht mehr gibt) ausgebildet, sondern als Designelement in der Fahrzeugmitte vorgesehen.

Das zweite Kunststoffmaterial kann bevorzugt Polycarbonat (PC), Polymethylmethacrylat (PMMA), Polystyrol (beispielsweise PS oder ASA), thermoplastisches Polyester, Polypropylen (PP), Cycloolefin-Copolymeren (COC), Polyethylen (PE), Polyamid (PA), Acrylnitril-Butadien-Styrol (ABS) oder ein Bioplymer (beispielsweise Zelluloseacetat, Polyhydroxybutyrat, Polymilchsäure, Polyhydroxyalkaonat) umfassen.

Das erste Kunststoffmaterial kann bevorzugt mit die mechanischen Eigenschaften verbessernden Zusätzen versehen sein. Insbesondere mit Partikeln (beispielsweise Talkum oder Russ) und/oder Fasern (beispielsweise Glas- oder Kohlefasern) verstärkt sein. Das erste Kunststoffmaterial ist vorzugsweise artgleich oder verträglich zu dem zweiten Kunststoffmaterial.

Das erste Kunststoffmaterial kann bevorzugt Polypropylen (PP) mit Talk-Füllstoffen, Polyamid (PA), Polycarbonat (PC), Acrylnitril-Butadien-Styrol (ABS), eine Polycarbonat-Mischung (PC) oder Acrylnitril-Butadien-Styrol (ABS) umfassen.

Die Deckschicht ist bevorzugt so ausgebildet, dass diese Wellenlängen des natürlichen Lichts nicht oder nur mit einer sehr geringen Transmission (Transmissionsgrad kleiner 10%) passieren lässt.

Die Deckschicht kann aus einer einzelnen oder aus mehreren Schichten bestehen.

Das Anordnen einer Deckschicht kann vorzugsweise mindestens einen Schritt des teilweisen oder vollständigen Lackierens des ersten und des zweiten Bereichs des geformten Verkleidungselements mit einem Lack umfassen, um hierdurch eine Lackschicht als Deckschicht auf dem Verkleidungselement aufzubringen.

Bevorzugt wird die Deckschicht auf der Sichtseite des Verkleidungselements angeordnet. Eine Anordnung der Deckschicht auf der Innenseite ist selbstredend ebenfalls möglich.

Die Deckschicht kann bevorzugt im Leuchtbereich vollständig oder partiell entfernt werden. Besonders bevorzugt kann die Deckschicht mittels Laserstrahlung perforiert oder abgetragen werden.

Der Volumenanteil des zweiten Kunststoffmaterials in dem Verkleidungselement liegt bevorzugt zwischen 1 Vol.% und 80 Vol.%, vorzugsweise zwischen 5 Vol.% und 50 Vol.%, weiter vorzugsweise zwischen 10 Vol.% und 30 Vol.%.

Das erste Kunststoffmaterial kann zusätzlich über wenigstens einen separaten Einzelmaterial-Anguss in einem plastifizierten und/oder fließfähigen Zustand in die Kavität eingespritzt werden, sodass sich dieses über den separaten Einzelmaterial-Anguss eingebrachte erste Kunststoffmaterial in der Kavität mit dem ersten Kunststoffmaterial aus dem Multimaterial-Anguss oder Multimaterial-Angusskanal verbindet. Da es bei großvolumigen Verkleidungselementen nicht sinnvoll ist die Füllung der Kavität allein über einen gemeinsamen Multimaterial-Anguss oder einen gemeinsamen Multimaterial-Angusskanal bzw. über mehrere Multimaterial-Angüsse oder mehrere Multimaterial-Angusskanäle zu realisieren, kann durch die zusätzliche Einspritzung des ersten Kunststoffmaterials über wenigstens einen separaten Einzelmaterial-Anguss die Füllzeit der Kavität deutlich verringert werden. Die Problematik von sichtbaren Fließnähten ist bei dann identischem Kunststoffmaterial zu vernachlässigen.

Weiter Teil der Erfindung ist ein Außenverkleidungsteil erhalten durch das vorstehend beschriebene Verfahren und dessen vorstehend beschriebenen Verfahrensvarianten.

### Ausführungsbeispiele

Im Folgenden wird die Erfindung anhand lediglich Ausführungsbeispiele darstellender Zeichnung erläutert. Es zeigen schematisch:
- Fig. 1: eine Draufsicht auf ein lackiertes Außenverkleidungsteil mit einer aktivierten Beleuchtung hinter dem Verkleidungselement;
- Fig. 2a: eine Draufsicht auf ein lackiertes Außenverkleidungsteil mit deaktivierter Beleuchtung hinter dem Verkleidungselement;
- Fig. 2b: eine Draufsicht auf das lackierte Außenverkleidungsteil aus Fig. 2 mit einer aktivierten Beleuchtung hinter dem Verkleidungselement;
- Fig. 3: eine schematische Darstellung eines Spritzgusswerkzeugs mit verschiedenen Angüssen bzw. Anspritzpunkten;
- Fig. 4-7: verschiedene Zeitpunkte während des Einspritzens der Kunststoffmaterialien in die Kavität;

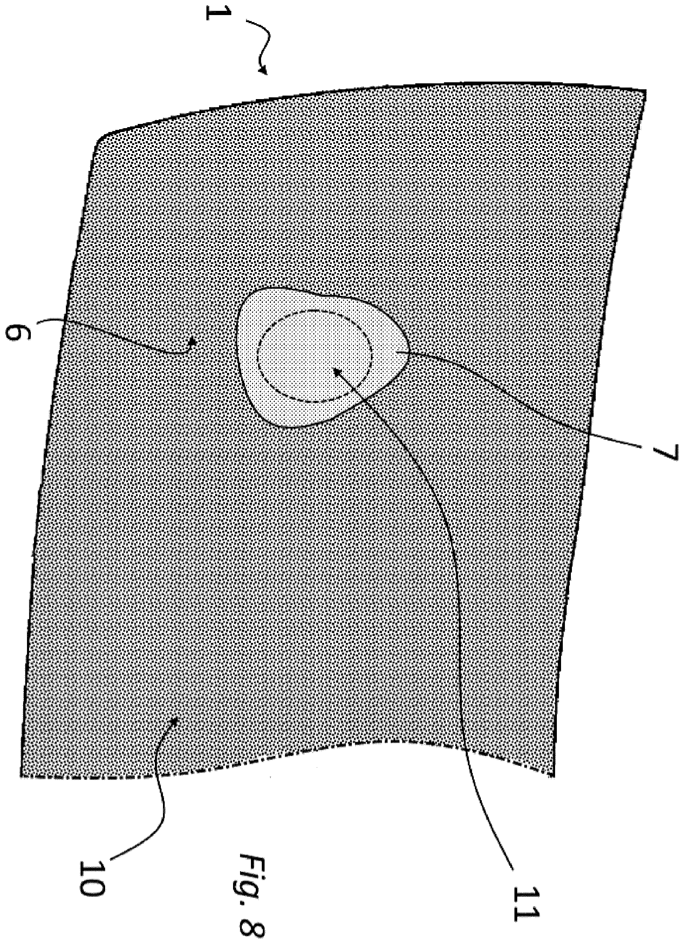

- Fig. 8: eine Draufsicht auf ein in der Kavität aus Fig. 3 geformtes Verkleidungselement;
- Fig. 9: eine Draufsicht auf ein in der Kavität aus Fig. 3 geformtes Verkleidungselement mit einer auf der Sichtseite aufgebrachten Lackschicht;
- Fig. 10: eine Draufsicht auf das lackierte Außenverkleidungsteil aus Fig. 9 mit aktivierter Beleuchtung hinter dem Verkleidungselement;
- Fig. 11: eine schematische Darstellung eines Kunststoff-Spritzgusswerkzeugs mit öffenbaren Formelementen;

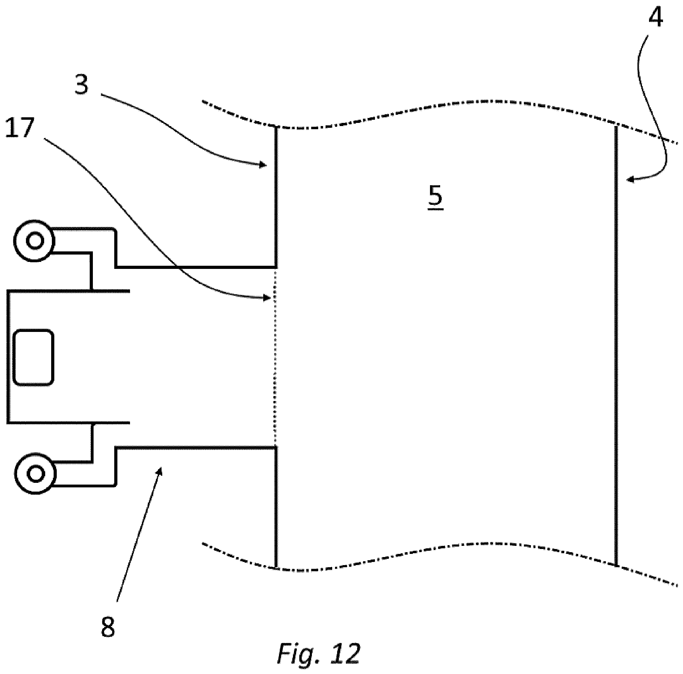

- Fig. 12: eine schematische Darstellung des Multimaterial-Anguss oder Multimaterial-Angusskanals in Verbindung mit der Kavität;
- Fig. 13: eine schematische Darstellung des Multimaterial-Anguss oder Multimaterial-Angusskanals in Verbindung mit der Kavität während des gemeinsamen Einspritzens der beiden plastifizierten und/oder fließfähigen Kunststoffmaterialien.

In den Figuren werden gleiche oder funktionsgleiche Elemente mit den gleichen Bezugszeichen versehen.

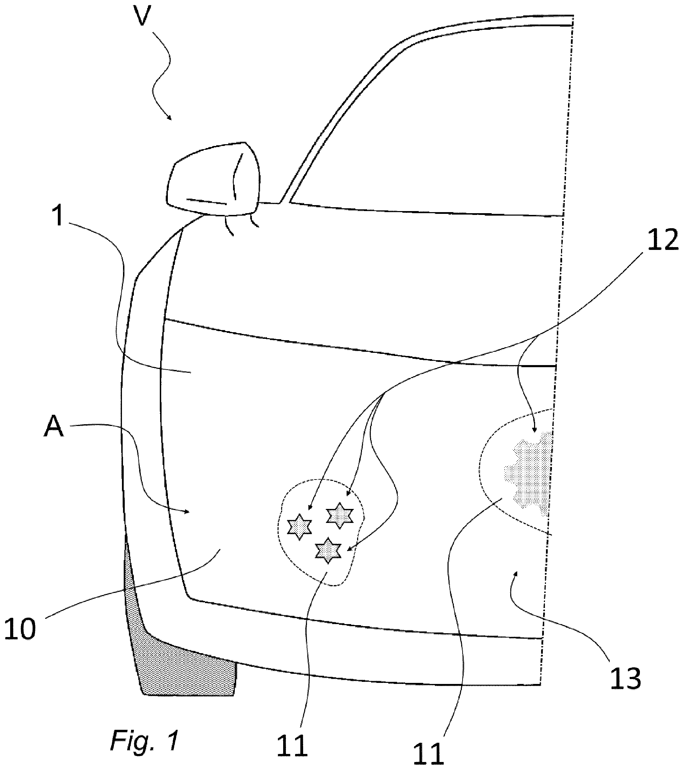

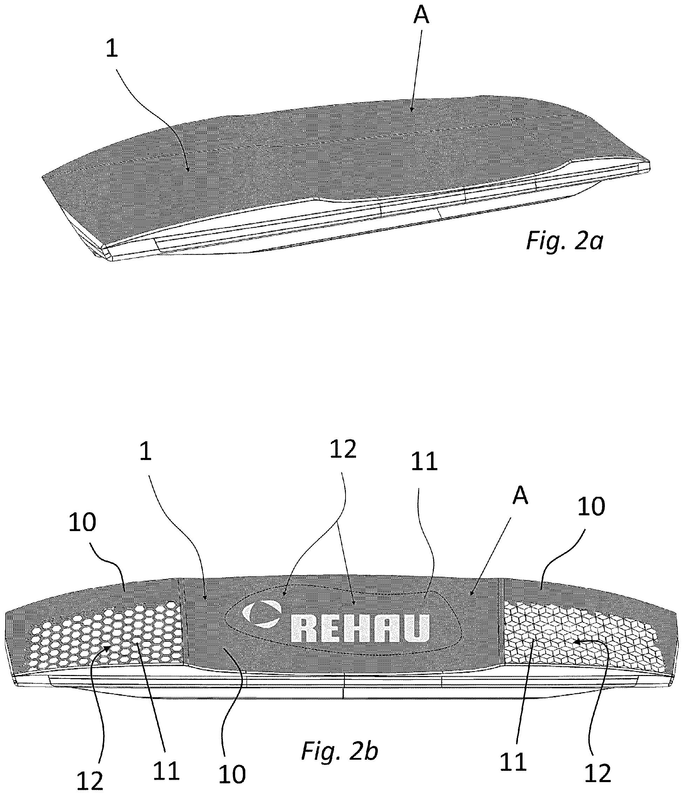

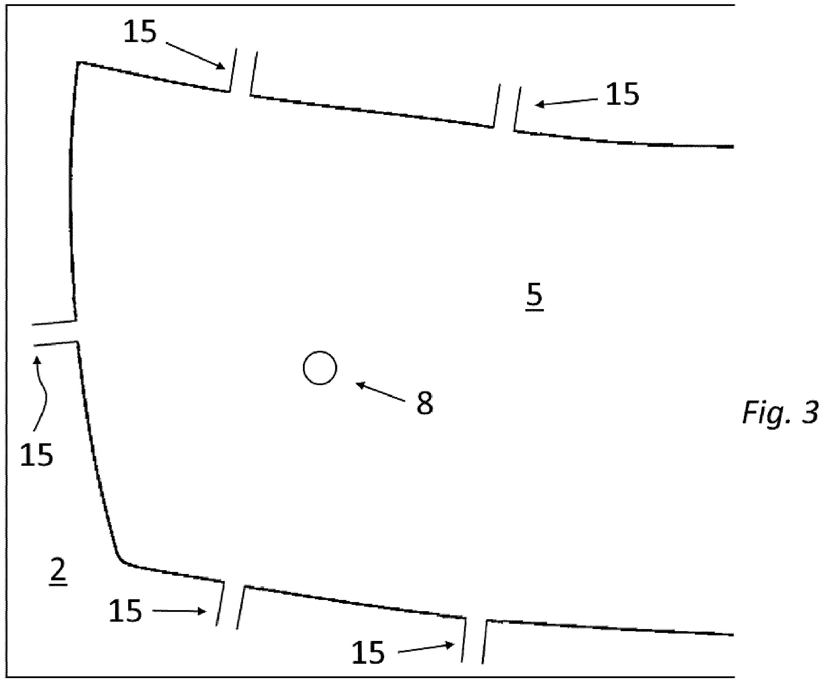

In der Fig. 1 und in den Fig. 2 und 3 ist ein Außenverkleidungsteil für ein Fahrzeug in Form einer Stoßfängerverkleidung (Fig. 1) und in Form eines Spoilers bzw. einer Spoileraußenhautverkleidung (Fig. 2 und 3) dargestellt.

Das Außenverkleidungsteil umfasst ein dünnwandig ausgebildetes Verkleidungselement 1 mit einer bestimmungsgemäßen Sichtseite A und einer der Sichtseite A gegenüberliegenden Innenseite, wobei das Verkleidungselement 1 bei einer Beleuchtung von der Innenseite her in wenigstens einem Leuchtbereich 12 lokal durchleuchtbar ausgebildet ist (vgl. Fig. 1 und Fig. 3).

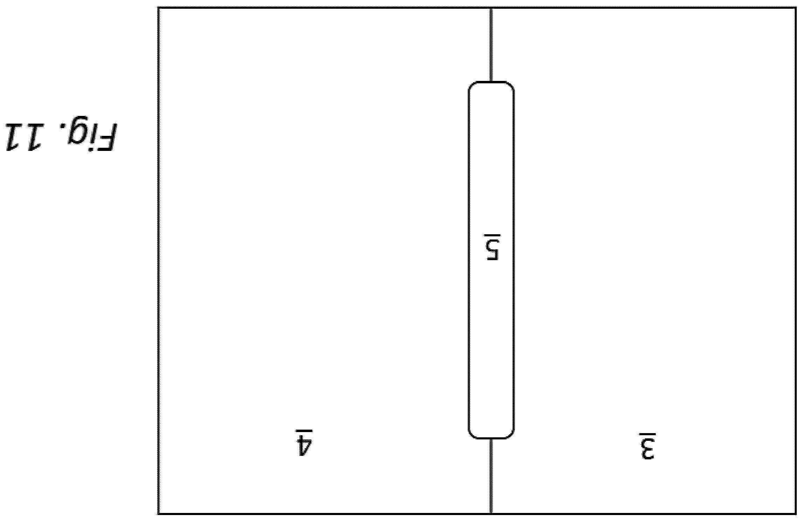

Das Verkleidungselement 1 wird in einem Spritzgussverfahren in einem Spritzgusswerkzeug 2 hergestellt, wobei das Spritzgusswerkzeug 2 aus wenigstens zwei relativ zueinander verlagerbaren Formhälften 3, 4 besteht, wobei die Formhälften 3, 4 im geschlossenen Zustand eine, das Verkleidungselement 1 geometrisch definierende, Kavität 5 zwischen sich ausbilden (vgl. Fig. 11).

Das Verkleidungselement 1 weist mindestens einen ersten Bereich 10 auf, der aus einem ersten Kunststoffmaterial 6 besteht, und das Verkleidungselement 1 weist ferner mindestens einen zweiten transparenten oder lichtdurchlässigen Bereich 11 auf, der aus einem zweiten Kunststoffmaterial 7 besteht.

Ein Verfahren zur Herstellung eines derartigen Verkleidungsteils umfasst die folgenden Schritte:
- einen Schritt des Formens des Verkleidungselements 1, der darin besteht das erste Kunststoffmaterial 6 zur Bildung des ersten Bereichs 10 und das zweite Kunststoffmaterial 7 zur Bildung des zweiten Bereichs 11 in die Kavität einzuspritzen,
- mindestens einen Schritt des teilweisen oder vollständigen Anordnens einer Deckschicht 13 auf dem ersten 10 und dem zweiten Bereich 11 des geformten Verkleidungselements 1, und
- mindestens einen Schritt des Entfernens eines Teils der Deckschicht 13 oder der gesamten Deckschicht 13 in dem wenigstens einen Leuchtbereich 12, wobei der Leuchtbereich 12 zumindest teilweise, vorzugsweise vollständig, innerhalb des transparenten oder lichtdurchlässigen Bereichs 11 des spitzgegossenen Verkleidungselements 1 liegt,
wobei das erste Kunststoffmaterial 6 und das zweite Kunststoffmaterial 7 über wenigstens einen gemeinsamen Multimaterial-Anguss 8 oder einen gemeinsamen Multimaterial-Angusskanal 8 in die Kavität 5 geleitet werden, wobei die beiden plastifizierten und/oder fließfähigen Kunststoffmaterialien 6, 7 bereits in dem gemeinsamen Multimaterial-Anguss 8 oder in dem gemeinsamen Multimaterial-Angusskanal 8 aufeinandertreffen und nachfolgend zusammen in die Kavität 5 geleitet und eingespritzt werden.

In einem Schritt des Verfahrens erfolgt noch ein Erstarren lassen der beiden Kunststoffmaterialien 6, 7 (nicht näher dargestellt).

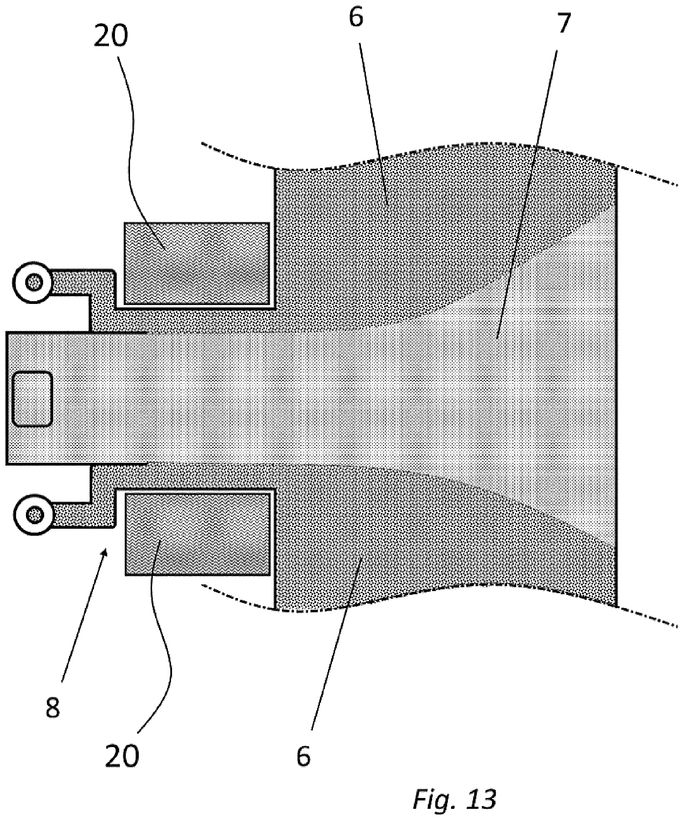

In der Fig. 13 ist dargestellt, dass der wenigstens eine Multimaterial-Anguss 8 oder Multimaterial-Angusskanal 8 eine eigene Heizvorrichtung 20 aufweisen kann, um durch eine Temperaturerhöhung der beiden Kunststoffmaterialien 6, 7 oder durch eine Verringerung der Abkühlrate der beiden Kunststoffmaterialien 6, 7 die Verbindung der beiden plastifizierten und/oder fließfähigen Kunststoffmaterialien 6, 7 untereinander optimieren zu können.

Das zweite Kunststoffmaterial kann Polycarbonat (PC), Polymethylmethacrylat (PMMA), Polystyrol (PS), thermoplastisches Polyester, Polypropylen (PP), Cycloolefin-Copolymeren (COC), Polyethylen (PE), Polyamid (PA), Acrylnitril-Butadien-Styrol (ABS) oder ein Bioplymer umfassen.

Das erste Kunststoffmaterial 6 ist mit die mechanischen Eigenschaften verbessernden Zusätzen versehen, insbesondere mit Partikeln und/oder Fasern verstärkt. Das erste Kunststoffmaterial 6 ist artgleich oder verträglich zu dem zweiten Kunststoffmaterial 7.

Das erste Kunststoffmaterial 6 umfasst Polypropylen (PP), Polypropylen (PP) mit Talk-Füllstoffen, Polyamid (PA), Polycarbonat (PC), Acrylnitril-Butadien-Styrol (ABS), eine Polycarbonat-Mischung (PC) oder Acrylnitril-Butadien-Styrol (ABS) umfasst.

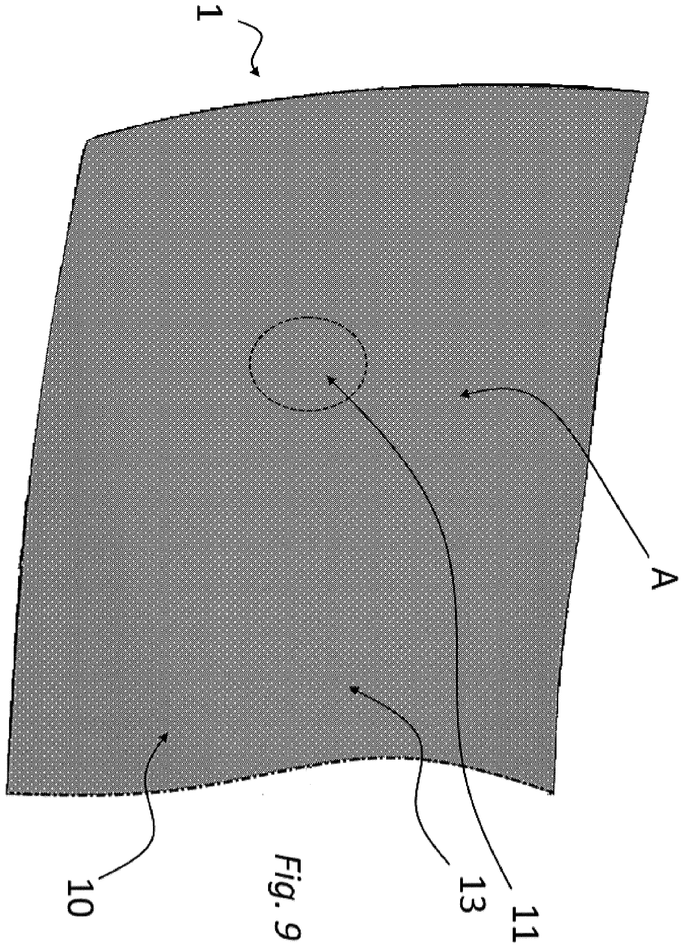

Das in Fig. 9 dargestellte Anordnen einer Deckschicht 13 umfasst mindestens einen Schritt des teilweise oder vollständigen Lackierens des ersten 10 und des zweiten Bereichs 11 des geformten Verkleidungselements 1 mit einem Lack, um hierdurch eine Lackschicht als Deckschicht 13 auf dem Verkleidungselement 1 aufzubringen. Die Deckschicht 13 wird auf der Sichtseite A des Verkleidungselements 1 angeordnet.

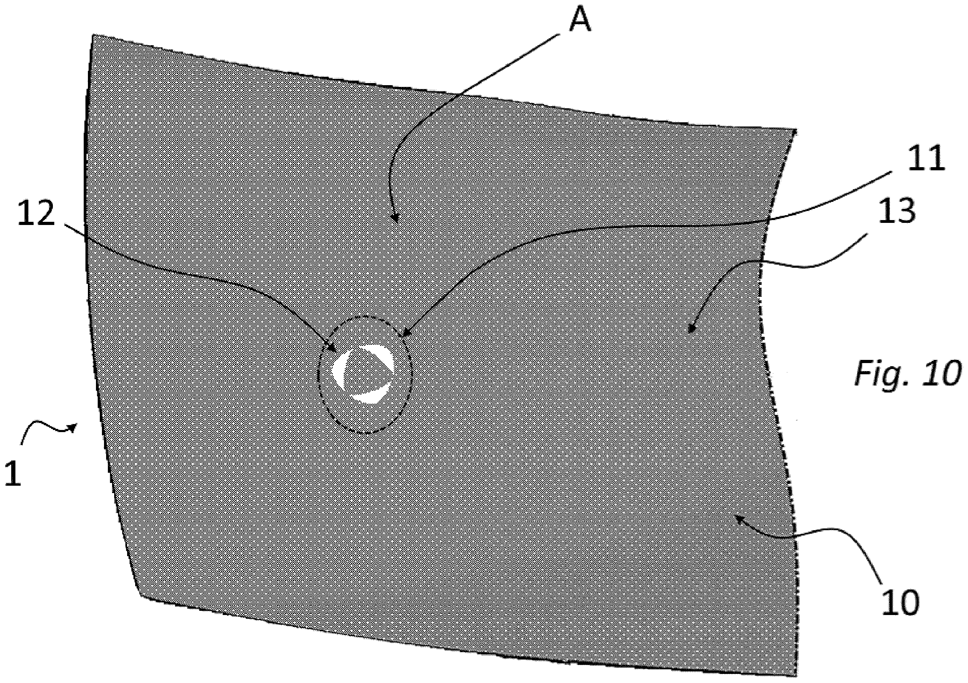

Wie in Fig. 10 gezeigt, wird die Deckschicht 13 im Leuchtbereich 12 vollständig oder partiell entfernt, insbesondere mittels Laserstrahlung perforiert oder abgetragen. Der so entstehende lokal durchleuchtbare Leuchtbereich 12 ist zudem in Fig. 1 und Fig. 2b gezeigt.

Der Volumenanteil des zweiten Kunststoffmaterials 7 in dem Verkleidungselement 1 liegt bevorzugt zwischen 1 Vol.% und 80 Vol.%, vorzugsweise zwischen 5 Vol.% und 50 Vol.%, weiter vorzugsweise zwischen 10 Vol.% und 30 Vol.%.

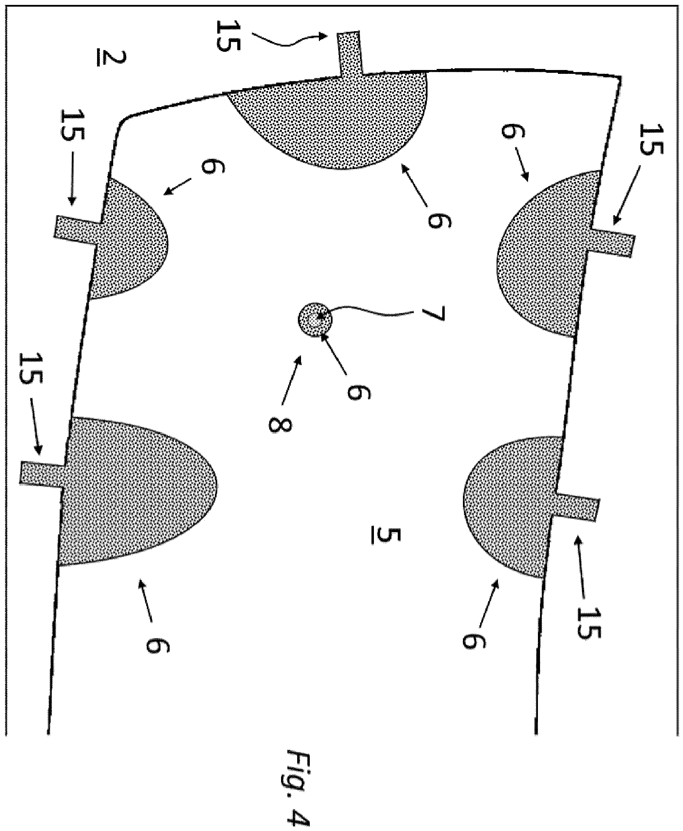

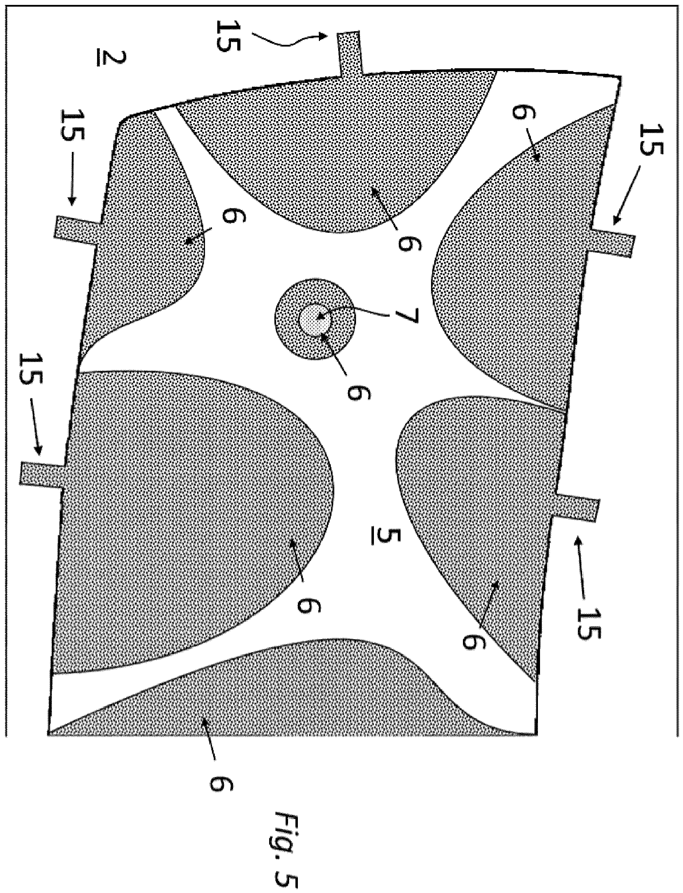

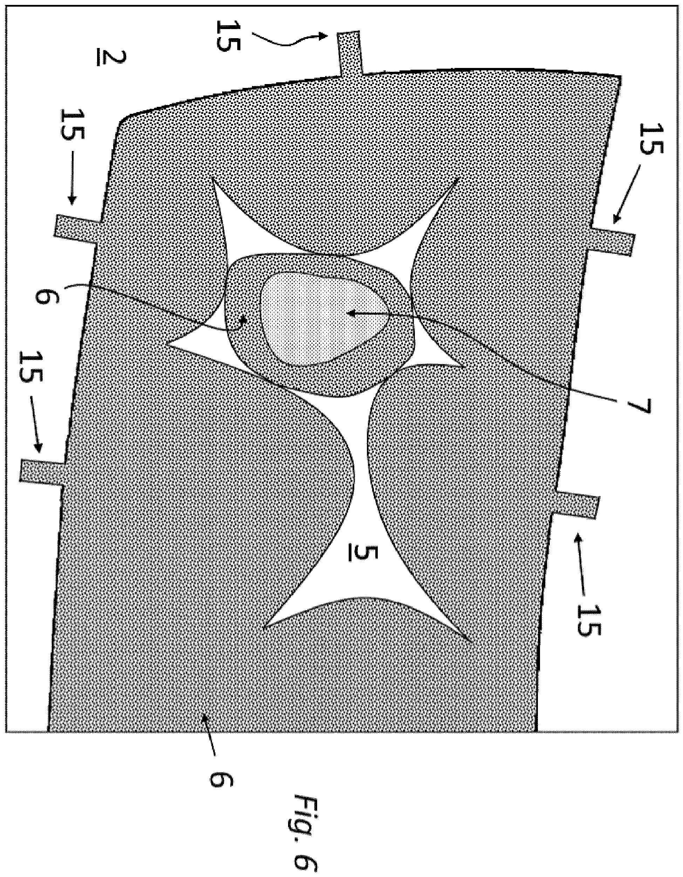

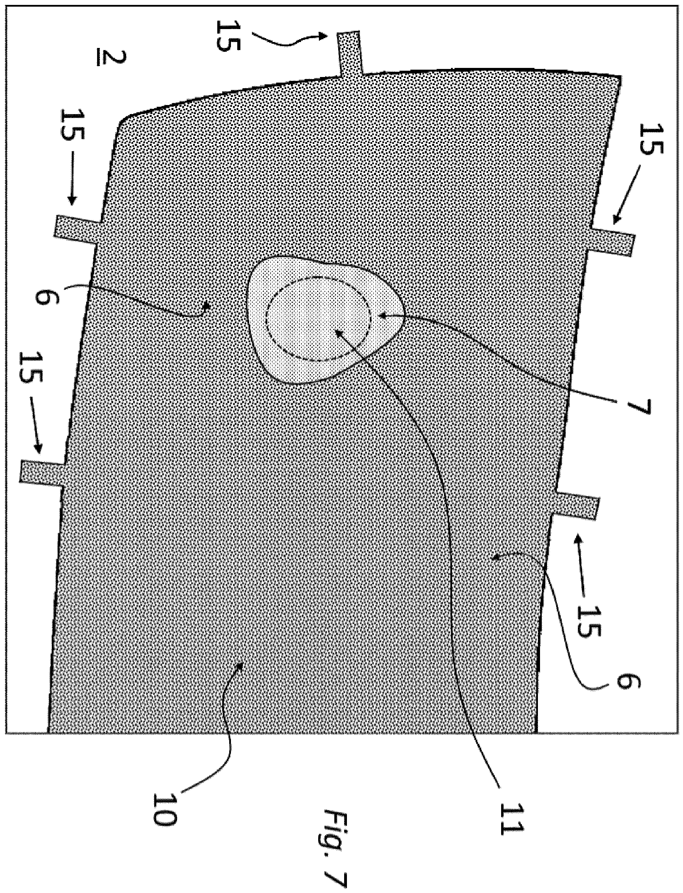

In den Fig. 3 bis Fig. 7 ist dargestellt, dass das erste Kunststoffmaterial 6 zusätzlich über wenigstens einen separaten Einzelmaterial-Anguss 15 in einem plastifizierten und/oder fließfähigen Zustand in die Kavität 5 eingespritzt wird, sodass sich dieses über den separaten Einzelmaterial-Anguss 15 eingebrachte erste Kunststoffmaterial 6 in der Kavität 5 mit dem ersten Kunststoffmaterial 6 aus dem Multimaterial-Anguss 8 oder Multimaterial-Angusskanal 8 verbindet.

## Patentansprüche

1. Verfahren zur Herstellung eines Außenverkleidungsteils aus Kunststoffmaterialien für ein Fahrzeug (V),
wobei das Außenverkleidungsteil ein dünnwandig ausgebildetes Verkleidungselement (1) mit einer bestimmungsgemäßen Sichtseite (A) und einer der Sichtseite (A) gegenüberliegenden Innenseite umfasst, wobei das Verkleidungselement (1) bei einer Beleuchtung von der Innenseite her in wenigstens einem Leuchtbereich (12) lokal durchleuchtbar ausgebildet ist,
wobei das Verkleidungselement (1) in einem Spritzgussverfahren in einem Spritzgusswerkzeug (2) hergestellt wird, wobei das Spritzgusswerkzeug (2) aus wenigstens zwei relativ zueinander verlagerbaren Formhälften (3, 4) besteht, wobei die Formhälften (3, 4) im geschlossenen Zustand eine, das Verkleidungselement (1) geometrisch definierende, Kavität (5) zwischen sich ausbilden,
wobei das Verkleidungselement (1) mindestens einen ersten Bereich (10) aufweist, der aus einem ersten Kunststoffmaterial (6) besteht, und das Verkleidungselement (1) ferner mindestens einen zweiten transparenten oder lichtdurchlässigen Bereich (11) aufweist, der aus einem zweiten Kunststoffmaterial (7) besteht,
wobei das Verfahren folgende Schritte umfasst:
- einen Schritt des Formens des Verkleidungselements (1), der darin besteht das erste Kunststoffmaterial (6) zur Bildung des ersten Bereichs (10) und das zweite Kunststoffmaterial (7) zur Bildung des zweiten Bereichs (11) in die Kavität einzuspritzen,
- mindestens einen Schritt des teilweisen oder vollständigen Anordnens einer Deckschicht (13) auf dem ersten (10) und dem zweiten Bereich (11) des geformten Verkleidungselements (1), und
- mindestens einen Schritt des Entfernens eines Teils der Deckschicht (13) oder der gesamten Deckschicht (13) in dem wenigstens einen Leuchtbereich (12), wobei der Leuchtbereich (12) zumindest teilweise, vorzugsweise vollständig, innerhalb des transparenten oder lichtdurchlässigen Bereichs (11) des spitzgegossenen Verkleidungselements (1) liegt,
**dadurch gekennzeichnet, dass**
das erste Kunststoffmaterial (6) und das zweite Kunststoffmaterial (7) über wenigstens einen gemeinsamen Multimaterial-Anguss (8) oder einen gemeinsamen Multimaterial-Angusskanal (8) in die Kavität (5) geleitet werden, wobei die beiden plastifizierten und/oder fließfähigen Kunststoffmaterialien (6, 7) bereits in dem gemeinsamen Multimaterial-Anguss (8) oder in dem gemeinsamen Multimaterial-Angusskanal (8) aufeinandertreffen und nachfolgend zusammen in die Kavität (5) geleitet und eingespritzt werden.

2. Verfahren nach Anspruch 1, **dadurch gekennzeichnet, dass** der wenigstens eine Multimaterial-Anguss (8) oder Multimaterial-Angusskanal (8) eine eigene Heizvorrichtung (20) aufweist, um durch eine Temperaturerhöhung der beiden Kunststoffmaterialien (6, 7) oder durch eine Verringerung der Abkühlrate der beiden Kunststoffmaterialien (6, 7) die Verbindung der beiden plastifizierten und/oder fließfähigen Kunststoffmaterialien (6, 7) untereinander optimieren zu können.

3. Verfahren nach Anspruch 1 oder 2, **dadurch gekennzeichnet, dass** das Außenverkleidungsteil eine Türunterkantenblende oder eine Stoßfängerverkleidung oder eine Heccklappenaußenverkleidung oder eine Kotflügelverkleidung oder eine Kühlerverkleidung oder eine Schwellerverkleidung oder eine Frontmaske oder ein Heckspoiler ist.

4. Verfahren nach einem der vorstehenden Ansprüche, **dadurch gekennzeichnet, dass** das zweite Kunststoffmaterial Polycarbonat (PC), Polymethylmethacrylat (PMMA), Polystyrol (PS), thermoplastisches Polyester, Polypropylen (PP), Cycloolefin-Copolymeren (COC), Polyethylen (PE), Polyamid (PA), Acrylnitril-Butadien-Styrol (ABS) oder ein Bioplymer umfasst.

5. Verfahren nach einem der vorstehenden Ansprüche, **dadurch gekennzeichnet, dass** das erste Kunststoffmaterial (6) mit die mechanischen Eigenschaften verbessernden Zusätzen versehen ist, insbesondere mit Partikeln und/oder Fasern verstärkt ist und/oder das erste Kunststoffmaterial (6) artgleich oder verträglich zu dem zweiten Kunststoffmaterial (7) ist.

6. Verfahren nach einem der vorstehenden Ansprüche, **dadurch gekennzeichnet, dass** das erste Kunststoffmaterial (6) Polypropylen (PP), insbesondere Polypropylen (PP) mit Talk-Füllstoffen, Polyamid (PA), Polycarbonat (PC), Acrylnitril-Butadien-Styrol (ABS), eine Polycarbonat-Mischung (PC) oder Acrylnitril-Butadien-Styrol (ABS) umfasst.

7. Verfahren nach einem der vorstehenden Ansprüche, **dadurch gekennzeichnet, dass** das Anordnen einer Deckschicht (13) mindestens einen Schritt des teilweise oder vollständigen Lackierens des ersten (10) und des zweiten Bereichs (11) des geformten Verkleidungselements (1) mit einem Lack umfasst, um hierdurch eine Lackschicht als Deckschicht (13) auf dem Verkleidungselement (1) aufzubringen.

8. Verfahren nach einem der vorstehenden Ansprüche, **dadurch gekennzeichnet, dass** die Deckschicht (13) auf der Sichtseite (A) des Verkleidungselements (1) angeordnet wird.

9. Verfahren nach einem der vorstehenden Ansprüche, **dadurch gekennzeichnet, dass** die Deckschicht (13) im Leuchtbereich (12) vollständig oder partiell entfernt, insbesondere mittels Laserstrahlung perforiert oder abgetragen wird.

10. Verfahren nach einem der vorstehenden Ansprüche, **dadurch gekennzeichnet, dass** der Volumenanteil des zweiten Kunststoffmaterials (7) in dem Verkleidungselement (1) zwischen 1 Vol.% und 80 Vol.%, vorzugsweise zwischen 5 Vol.% und 50 Vol.%, weiter vorzugsweise zwischen 10 Vol.% und 30 Vol.% liegt.

11. Verfahren nach einem der vorstehenden Ansprüche, **dadurch gekennzeichnet, dass** das erste Kunststoffmaterial (6) zusätzlich über wenigstens einen separaten Einzelmaterial-Anguss (15) in einem plastifizierten und/oder fließfähigen Zustand in die Kavität (5) eingespritzt wird, sodass sich dieses über den separaten Einzelmaterial-Anguss (15) eingebrachte erste Kunststoffmaterial (6) in der Kavität (5) mit dem ersten Kunststoffmaterial (6) aus dem Multimaterial-Anguss (8) oder Multimaterial-Angusskanal (8) verbindet.

12. Außenverkleidungsteil erhalten durch das Verfahren nach einem der Ansprüche 1 bis 11.
